# FASCICULE DE BREVET EUROPEEN

(11) **EP 3 306 419 B1**
(45) Date de publication et mention de la délivrance du brevet: **27.11.2019**
(21) Numéro de dépôt: 16192302.4
(22) Date de dépôt: 05.10.2016
(51) Int. Cl.: G04B 37/08, G04B 39/02, G04B 19/32

(54) **JOINT HORLOGER**
UHRDICHTUNG
TIMEPIECE SEAL

(43) Date de publication de la demande: 11.04.2018
(73) Titulaire: The Swatch Group Research and Development Ltd, 2074 Marin (CH)
(72) Inventeur: FRANCOIS, Nicolas, 2000 Neuchâtel (CH); FERNANDEZ CIURLEO, Maria, 2114 Fleurier (CH); RANNOUX, Claire, 1110 Morges (CH)
(74) Mandataire: Ravenel, Thierry Gérard Louis

(56) Documents cités:
- EP-A1- 2 363 036
- FR-A1- 2 979 571
- Anonymous: "SOJH | Le Salon Online de la Joaillerie et de l'Horlogerie", , 18 mai 2009 (2009-05-18), XP055361061, Extrait de l'Internet: URL:https://www.sojh.ch/revue/2009-05-18-l e-monde-bouge-les-montres-et-les-marques-a ussi [extrait le 2017-04-03]

## Description

### OBJET DE L'INVENTION

La présente invention se rapporte au domaine horloger. Plus précisément, la présente invention se rapporte à un joint utilisé dans des pièces d'horlogerie et notamment à un joint de glace phosphorescent et/ou fluorescent, à son procédé de fabrication et à la pièce d'horlogerie munie dudit joint.

### ARRIÈRE-PLAN TECHNOLOGIQUE ET ÉTAT DE LA TECHNIQUE

Pour rendre visible un élément dans l'obscurité, il est connu d'utiliser des composés luminescents qui se chargent en énergie lumineuse avant de la restituer. Dans l'industrie horlogère, on peut, à titre d'exemple, citer les documents EP 2 264 554, EP 2 717 104 et EP 1 837 387 décrivant l'utilisation de composés phosphorescents et/ou fluorescents. Il peut s'agir des aiguilles ou d'éléments d'habillage tels que le cadran, la lunette, le fond ou la carrure qui sont chargés de particules luminescentes ou revêtus avec une matière luminescente. En variante, la source luminescente peut se présenter sous forme de pastille positionnée à différents endroits dans ou sur la boîte de montre.

On connait également du document EP 2 363 036 un procédé de fabrication d'une pièce comportant un revêtement élastomère et du document FR 2 979 571 l'utilisation d'un procédé de fabrication d'une pièce couche par couche.

A la connaissance de la demanderesse, aucun document de l'art antérieur ne propose d'utiliser le joint de glace disposé entre la carrure et la glace et destiné à assurer l'étanchéité de la boite de montre vis-à-vis de l'extérieur et le cas échéant à assurer la fixation de la glace sur la carrure, comme source luminescente. Jusqu'à ce jour, la tendance était plutôt de garder le joint de glace le plus discret possible pour ne pas altérer l'aspect esthétique et gêner le design de la montre.

### RÉSUMÉ DE L'INVENTION

La présente invention propose de doter un joint horloger, notamment un joint de glace d'une nouvelle fonctionnalité d'éclairage. Plus précisément, la présente invention propose d'élaborer des joints notamment des joints de glace phosphorescents et/ou fluorescents afin de créer une ambiance lumineuse permettant notamment de lire les informations sur le cadran dans l'obscurité.

A cette fin, un joint, notamment un joint de glace, son procédé de fabrication ainsi qu'une pièce d'horlogerie selon les revendications annexées sont proposés.

### BRÈVE DESCRIPTION DES FIGURES

Les caractéristiques et avantages de la présente invention apparaîtront à la lecture de la description détaillée ci-dessous faisant référence aux figures suivantes.

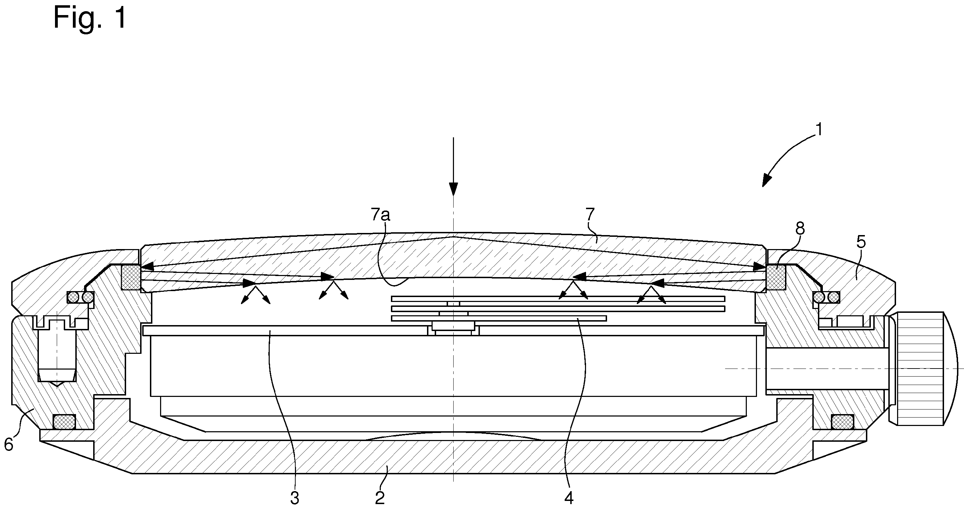

La figure 1 représente une vue en coupe de la pièce d'horlogerie munie d'un joint de glace selon l'invention. La trajectoire des faisceaux lumineux incident et émis par le joint est représentée schématiquement.

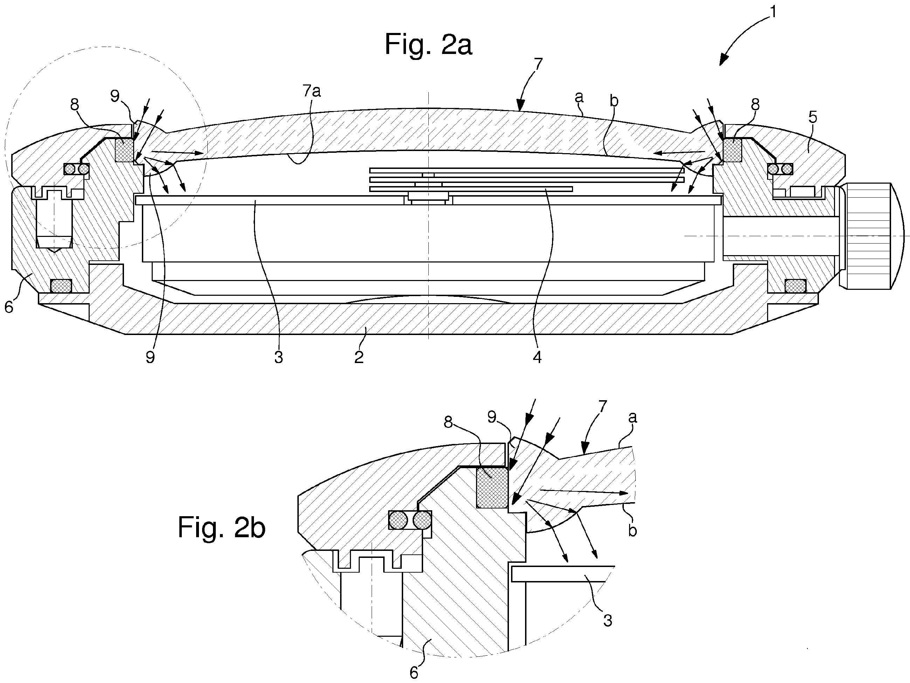

La figure 2a représente une vue en coupe d'une variante de la pièce d'horlogerie munie d'un joint de glace selon l'invention. Selon cette variante, la glace est modifiée pour améliorer la transmission du faisceau lumineux vers le cadran. La figure 2b représente un agrandissement de la partie modifiée de la glace.

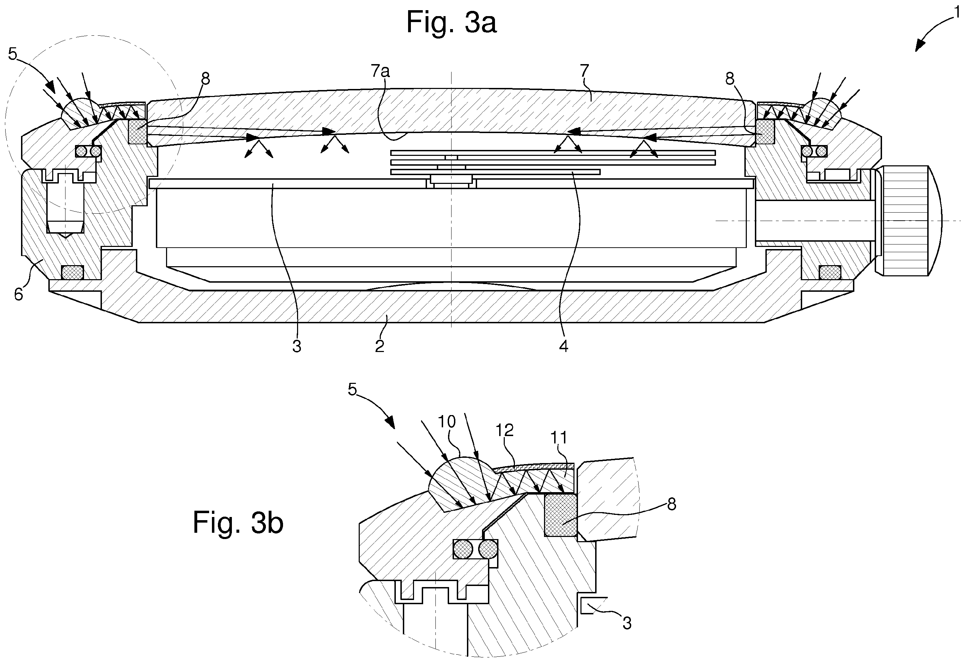

La figure 3a représente une vue en coupe d'une autre variante de la pièce d'horlogerie munie d'un joint de glace selon l'invention. Selon cette autre variante, la lunette est modifiée pour améliorer la transmission du faisceau lumineux vers le cadran. La figure 3b représente un agrandissement de la partie modifiée de la lunette.

### DESCRIPTION DÉTAILLÉE DE L'INVENTION

La présente invention se rapporte à un joint horloger phosphorescent et/ou fluorescent et sera décrit ci-après de manière non limitative dans le cadre d'une utilisation comme et un joint de glace phosphorescent pour boite de montre, à son procédé de fabrication et à la pièce d'horlogerie, telle qu'une montre-bracelet, munie du joint phosphorescent. De manière conventionnelle, la pièce d'horlogerie 1 représentée en coupe à la figure 1 comporte un fond 2, un cadran 3, des aiguilles 4, une lunette 5 fixe ou tournante, une carrure 6, une glace 7 et un joint de glace 8 disposé entre la carrure 6 et la glace 7 pour assurer l'étanchéité, et dans l'exemple illustré pour assurer en outre la fixation de la glace sur la carrure. Le joint de glace présente comme caractéristique d'être luminescent pour permettre l'éclairage des éléments de la boite de montre, voisins du joint et notamment du cadran et /ou des aiguilles dans l'obscurité. En mode jour, la lumière incidente est acheminée jusqu'au joint luminescent par la glace formant entre sa face supérieure et sa face inférieure un guide d'ondes et dont la lumière est notamment extraite de la surface inférieure 7a de la glace. Une fois le joint chargé, il émet une lumière visible qui est diffusée notamment vers le cadran comme schématisé à la figure 1. Selon une variante, la pièce d'horlogerie ne comprend pas de lunette ou la lunette 5 ne recouvre pas le joint 8 et dans ce cas de la lumière incidente arrive également directement sur la surface supérieure exposée du joint 8. Dans l'exemple illustré, la glace 7 présente une forme bombée sphérique mais il va de soi que selon d'autres variantes, la glace 7 peut présenter d'autres formes, par exemple la glace 7 peut être plate, ou encore bombée cylindrique.

Le joint de glace est formé d'une matrice polymère chargée de pigments phosphorescents. Il est réalisé comme suit. La matière du joint est choisie pour pouvoir répondre après préparation avec les pigments aux propriétés requises pour un joint de glace, à savoir :
- Dureté shore : 60-75 shore D ;
- Résistance à l'hydrolyse ;
- Perméabilité suffisamment faible à la vapeur d'eau pour éviter des phénomènes de condensation dans les situations d'utilisation courantes (douche, bain chauds, ...) mais suffisamment élevée pour permettre dans un délai raisonnable un équilibre entre l'extérieur et l'intérieur de la montre ;
- Résistance aux UV pour éviter le jaunissement, la décoloration ou une altération des propriétés du joint ;
- Résistance à des changements thermiques.

A cet effet, la matière de départ est un élastomère, un thermoplastique ou un élastomère thermoplastique choisi parmi la liste non exhaustive suivante : polyuréthane bi-composant, silicone, polyuréthane thermoplastique, polyamide 12, polyester, résine photo-polymérisable. Elle est mélangée à un pigment phosphorescent de type oxyde d'alcalino-terreux dopé avec des terres rares. Par exemple, le pigment phosphorescent peut être de l'aluminate de strontium, du silicate de strontium, du silicate de baryum ou du silicate de calcium dopé avec de l'europium et du dysprosium. Le pigment se présente sous forme de poudres ayant, toujours à titre d'exemple, une distribution granulométrique telle que D90 est inférieur à 40 µm. Le pigment phosphorescent est introduit dans la matière de départ avec une teneur comprise entre 1 et 70% en poids, de préférence entre 2 et 20%, plus préférentiellement entre 2 et 10% et encore plus préférentiellement entre 2 et 5% pour obtenir les propriétés de phosphorescence sans altérer les propriétés mécaniques et d'étanchéité du joint. Un pigment ou colorant fluorescent peut être également utilisé en combinaison avec le pigment phosphorescent afin de réaliser l'émission colorée souhaitée. Le pigment phosphorescent, et éventuellement le pigment ou colorant fluorescent, sont introduits lors d'une opération de mélange avec un agent compatibilisant hydrophile de type silane fonctionnalisé, par exemple du Dynasylan 4148 de Evonik, afin d'éviter la formation d'agglomérats dans le mélange et de maintenir les pigments en dispersion. On précisera que l'agent compatibilisant peut déjà être inclus dans la formulation des pigments. Ensuite, le joint peut être préparé de manière classique par extrusion, injection, ou coulée dans un moule.

A titre d'exemple, un joint a été préparé partant d'un polyuréthane bi-composant A et B avec un rapport A/B de 100/175. Tout d'abord, un mélange du composant A avec 2% en poids de pigments phosphorescents a été homogénéisé et mis sous vide pour dégazer le mélange. Les pigments phosphorescents utilisés étaient un aluminate de strontium dopé europium et dysprosium avec une granulométrie comprise entre 5 et 15 µm. Ensuite, le composant B a été ajouté au mélange avant une nouvelle étape de dégazage. Le mélange ainsi obtenu a été coulé à température ambiante dans un moule préalablement imprégné d'agent démoulant et maintenu dans le moule pendant minimum deux heures avant démoulage et stabilisation pendant 24h. La matière ainsi obtenue a une dureté comprise entre 59-63 Shore D et présente les propriétés d'étanchéité requises pour l'application.

Selon le mode de réalisation de la figure 1, le joint peut être disposé dans une pièce d'horlogerie conventionnelle. Cependant, pour améliorer la transmission des ondes lumineuses vers le cadran ou les zones d'intérêt comme des compteurs ou le guichet de quantième ou un affichage électro-optique, il peut s'avérer utile de modifier certains composants de la pièce d'horlogerie comme suit.

Selon une première variante représentée aux figures 2a et 2b, la glace de montre est modifiée de manière à ce que la lumière incidente soit focalisée sur le joint phosphorescent. Par exemple, la glace 7 est munie sur la périphérie de sa face extérieure (a) d'une lentille convergente 9 permettant de concentrer le faisceau de lumière incident sur le joint 8. Afin de ne pas perturber la lecture du cadran, la lentille est disposée sur la périphérie de la glace formant un anneau s'étendant sur une distance maximale de 10 mm, voire de 5 mm. Optionnellement, la glace 7 peut être munie sur sa face intérieure (b) d'une lentille 9 convergente ou de type Fresnel permettant de focaliser le faisceau lumineux émis par le joint 8 sur les indications souhaitées du cadran 3. Dans les deux cas, la lentille peut être usinée dans la glace ou rapportée par collage. Bien entendu dans le cas où la glace est formée par moulage, la lentille peut être réalisée dans la même matière que la matière de fabrication de la glace.

Selon une deuxième variante représentée aux figures 3a et 3b, c'est la lunette 5 qui est modifiée pour assurer une réception optimale de la lumière ambiante par le joint 8. Elle comporte sur sa face extérieure un dôme de transfert 10 de type lentille de Fresnel focalisant et dirigeant la lumière incidente vers la portion 11 de la lunette agissant comme guide d'ondes jusqu'au joint 8. Cette portion 11 est munie sur sa face extérieure d'une couche 12, réfléchissante respectivement d'indice de réfraction légèrement plus faible que la portion 11 réfléchissant respectivement réfractant la lumière au sein du guide d'ondes. Selon ce mode de réalisation, la lunette est réalisée dans un matériau transparent aux longueurs d'onde nécessaires à l'excitation des pigments phosphorescents à l'exception de la couche 12 réfléchissante respectivement d'indice de réfraction légèrement plus faible que la portion 11. Cette couche 12 peut, par exemple, être une couche métallisée. Pour focaliser le faisceau lumineux émis par le joint sur des endroits particuliers du cadran, il est également envisageable de modifier la face intérieure de la glace comme présenté à la figure 2.

Selon une troisième variante, les composants de la boîte de montre tels que la lunette et la carrure sont réalisés dans un matériau transparent ayant une transmission lumineuse d'au moins 80%. Par exemple, le matériau peut être en polyméthacrylate de méthyle (PMMA), en polyamide amorphe, en polycarbonate, en méthylméthacrylate-acrylonitrile-butadiène-styrène (MABS), en verre, en saphir, etc.

On précisera que la présente invention n'exclut pas de combiner les variantes précitées, et que d'autres joints horlogers peuvent profiter de cette phosphorescence et/ou fluorescence : par exemple pour du SAV (présence ou absence de joint) ou encore pour les opérations d'assemblage afin de différencier le type de joint à monter, surtout s'ils sont transparents, de dimensions similaires, mais avec des propriétés mécaniques différentes.

On peut aussi envisager selon une variante de l'invention de n'avoir que des pigments ou colorants fluorescents dans la matrice polymère, ces pigments fluorescents pouvant illuminer d'une couleur particulière une zone de la montre lorsqu'ils sont soumis à une lumière d'excitation afin d'avoir des effets purement esthétiques. A titre d'exemple, ces pigments ou colorants fluorescents, dont les proportions dans la matrice sont les mêmes que celles mentionnées ci-dessus en liaison avec les pigments phosphorescents, peuvent être choisis parmi l'ensemble comprenant la fluorescéine, un naphtyle, l'anthracène, la coumarine, la rhodamine, un fluorobenzoate.

On pourra encore prévoir dans une autre variante que le joint comprend une matrice polymère chargé avec un mélange de pigments phosphorescents et fluorescents pour combiner les effets mentionnés précédemment.

Le joint qui vient d'être décrit peut servir non seulement à la fixation de la glace sur la carrure mais aussi à réaliser l'étanchéité d'une telle glace. Le joint peut également servir l'étanchéité d'autres organes d'une pièce horlogerie tels qu'une tige de commande ou un bouton poussoir.

### Légende

(1) Pièce d'horlogerie
(2) Fond
(3) Cadran
(4) Aiguilles
(5) Lunette
(6) Carrure
(7) Glace
   (a) Face extérieure
   (b) Face intérieure
(8) Joint de glace
(9) Lentille, et plus précisément lentille convergente ou de type Fresnel
(10) Dôme de transfert de la lunette
(11) Portion de la lunette agissant comme guide d'ondes
(12) Couche diffusante

## Revendications

1. Pièce d'horlogerie (1) comprenant un joint (8), **caractérisé en ce que** le joint comprend une matrice polymère chargée avec des pigments phosphorescents et/ou fluorescents.

2. Pièce d'horlogerie selon la revendication 1, dans lequel la matrice polymère comprend entre 1 et 70%, de préférence entre 2 et 20%, plus préférentiellement entre 2 et 10%, et encore plus préférentiellement entre 2 et 5% en poids de pigments phosphorescents et/ou fluorescents.

3. Pièce d'horlogerie selon la revendication 1 ou 2, dans lequel les pigments phosphorescents sont de type oxyde alcalino-terreux dopés avec des terres rares.

4. Pièce d'horlogerie selon l'une quelconque des revendications précédentes, dans lequel la matrice polymère comprend un mélange de pigments phosphorescents et de pigments fluorescents.

5. Pièce d'horlogerie selon l'une quelconque des revendications précédentes, dans lequel la matrice polymère est réalisée dans un matériau élastomère, thermoplastique ou élastomère thermoplastique.

6. Pièce d'horlogerie selon l'une quelconque des revendications précédentes, dans lequel la matrice polymère comprend un polyuréthane bi-composant, un silicone, un polyuréthane thermoplastique, un polyamide 12, un polyester ou une résine photo-polymérisable.

7. Pièce d'horlogerie selon l'une quelconque des revendications précédentes, dans lequel les pigments fluorescents sont choisis parmi l'ensemble comprenant la fluorescéine, un naphtyle, l'anthracène, la coumarine, la rhodamine, un fluorobenzoate

8. Pièce d'horlogerie (1) comportant une carrure (6) et une glace (7) disposée dans un logement de la carrure, **caractérisé en ce qu'**un joint selon l'une des revendications précédentes est interposé entre la carrure (6) et la glace (7).

9. Pièce d'horlogerie (1) selon la revendication 8, dans laquelle la glace (7) comporte en périphérie de sa face extérieure à la pièce d'horlogerie (1) une lentille (9) convergente.

10. Pièce d'horlogerie (1) selon la revendication 8 ou 9 dans laquelle la glace (7) comporte en périphérie de sa face intérieure à la pièce d'horlogerie (1) une lentille (9) convergente ou de type Fresnel.

11. Pièce d'horlogerie (1) selon les revendications 9 ou 10, dans laquelle la lentille (9) occupe un espace annulaire d'une épaisseur inférieure à 10 mm et, de préférence, à 5 mm.

12. Pièce d'horlogerie (1) selon l'une quelconque des revendications 8 à 11, et comportant une lunette (5) montée sur la carrure ou venant de matière avec la carrure, dans laquelle la lunette (5) comporte sur sa face extérieure à la pièce d'horlogerie un dôme (10) transparent aux longueurs d'onde utiles pour exciter les pigments permettant de focaliser et diriger la lumière vers une portion (11) de la lunette agissant comme guide d'ondes jusqu'au joint de glace (8), ladite portion (11) comportant sur sa face extérieure une couche réfléchissante ou ayant un indice de réfraction légèrement plus faible que la portion 11.

13. Pièce d'horlogerie (1) selon l'une quelconque des revendications 8 à 11, et comportant une lunette (5) montée sur la carrure ou venant de matière avec la carrure dans laquelle la lunette (5) et la carrure (6) sont réalisées en tout ou en partie dans un matériau transparent aux longueurs d'onde utiles.

14. Procédé de fabrication d'un joint (8) pour pièce d'horlogerie (1) comprenant les étapes suivantes :
- Mise à disposition d'un polymère et de pigments phosphorescents et/ou fluorescents ;
- Mélange du polymère et des pigments avec une proportion de pigments comprise entre 1 et 70%, de préférence entre 2 et 20%, plus préférentiellement entre 2 et 10%, et encore plus préférentiellement entre 2 et 5% en poids.

15. Procédé selon la revendication 14, dans lequel les pigments se présentent sous forme d'une poudre ayant une distribution granulométrique avec un D90 inférieur à 40µm.

16. Procédé selon les revendications 14 ou 15, dans lequel le mélange comporte un mélange de pigments phosphorescents et de pigments fluorescents.

17. Procédé selon l'une quelconque des revendications 14 à 16, dans lequel un agent compatibilisant est introduit dans le mélange afin d'éviter la formation d'agglomérats et maintenir les pigments en suspension.

18. Procédé selon la revendication 17, dans lequel l'agent compatibilisant est de type silane fonctionnalisé.

## Patentansprüche

1. Uhr (1) mit einer Dichtung (8), **dadurch gekennzeichnet, dass** die Dichtung eine mit phosphoreszierenden und/oder fluoreszierenden Pigmenten beladene Polymermatrix umfasst.

2. Uhr nach Anspruch 1, wobei die Polymermatrix zwischen 1 und 70 Gew.-%, vorzugsweise zwischen 2 und 20 Gew.-%, besonders bevorzugt zwischen 2 und 10 Gew.-% und noch bevorzugter zwischen 2 und 5 Gew.-% phosphoreszierende und/oder fluoreszierende Pigmente enthält.

3. Uhr nach Anspruch 1 oder 2, wobei die phosphoreszierenden Pigmente vom Typ Erdalkalioxid sind, das mit seltenen Erden dotiert ist.

4. Uhr nach einem der vorhergehenden Ansprüche, wobei die Polymermatrix ein Gemisch aus phosphoreszierenden Pigmenten und fluoreszierenden Pigmenten enthält.

5. Uhr nach einem der vorhergehenden Ansprüche, wobei die Polymermatrix aus einem elastomeren, thermoplastischen oder thermoplastisch-elastomeren Material hergestellt ist.

6. Uhr nach einem der vorhergehenden Ansprüche, wobei die Polymermatrix ein Zwei-Komponenten-Polyurethan, Silikon, thermoplastisches Polyurethan, Polyamid 12, Polyester oder ein fotopolymerisierbares Harz enthält.

7. Uhr nach einem der vorhergehenden Ansprüche, wobei die fluoreszierenden Pigmente aus der Gruppe ausgewählt sind, die Fluoreszein, Naphthyl, Anthracen, Kumarin, Rhodamin und Fluorbenzoat umfasst.

8. Uhr (1), umfassend ein Gehäusemittelteil (6) und ein in einer Aufnahme des Gehäusemittelteils angeordnetes Glas (7), **dadurch gekennzeichnet, dass** zwischen das Gehäusemittelteil (6) und das Glas (7) eine Dichtung nach einem der vorhergehenden Ansprüche eingesetzt ist.

9. Uhr (1) nach Anspruch 8, wobei das Glas (7) als Uhrenteil (1) an seiner peripheren Außenfläche eine konvergierende Linse (9) aufweist.

10. Uhr (1) nach Anspruch 8 oder 9, wobei das Glas (7) als Uhrenteil (1) an seiner peripheren Innenfläche eine konvergierende Linse (9) oder eine Fresnel-Linse aufweist.

11. Uhr (1) nach den Ansprüchen 9 oder 10, wobei die Linse (9) einen Ringraum mit einer Dicke kleiner als 10 mm, vorzugsweise kleiner als 5 mm einnimmt.

12. Uhr nach einem der Ansprüche 8 bis 11, umfassend eine Lünette (5), die am Gehäusemittelteil montiert ist oder mit dem Gehäusemittelteil einstückig ausgebildet ist, wobei die Lünette (5) auf ihrer Außenseite bezüglich des Uhr eine Kuppel (10) aufweist, die für zur Erregung der Pigmente verwendbare Wellenlängen transparent ist, was ermöglicht, das Licht auf einen Abschnitt (11) der Lünette zu fokussieren und zu richten, der als Wellenleiter bis zu der Glasdichtung (8) wirkt, wobei der Abschnitt (11) auf seiner Außenseite eine Schicht aufweist, die reflektierend ist oder einen Brechungsindex etwas geringer als jener des Abschnitts (11) besitzt.

13. Uhr (1) nach einem der Ansprüche 8 bis 11, umfassend eine Lünette (5), die am Gehäusemittelteil montiert ist oder mit dem Gehäusemittelteil einstückig ausgebildet ist, wobei die Lünette (5) und das Gehäusemittelteil (6) ganz oder teilweise aus einem für verwendbare Wellenlängen transparenten Material ausgebildet sind.

14. Verfahren zum Herstellen einer Dichtung (8) für eine Uhr (1), umfasssend die folgenden Schritte:
- Bereitstellen eines Polymers und phosphoreszierender und/oder fluoreszierender Pigmente;
- Mischen des Polymers und der Pigmente mit einem Pigmentanteil zwischen 1 und 70 Gew.-%, vorzugsweise zwischen 2 und 20 Gew.-%, besonders bevorzugt zwischen 2 und 10 Gew.-% und noch bevorzugter zwischen 2 und 5 Gew.-%.

15. Verfahren nach Anspruch 14, wobei die Pigmente in Form eines Pulvers mit einer Korngrößenverteilung mit D90 kleiner 40 µm vorliegen.

16. Verfahren nach den Ansprüchen 14 oder 15, wobei das Gemisch ein Gemisch aus phosphoreszierenden Pigmenten und fluoreszierenden Pigmenten enthält.

17. Verfahren nach einem der Ansprüche 14 bis 16, wobei ein Kompatibilisierungsmittel in das Gemisch eingeleitet wird, um die Bildung von Agglomeraten zu verhindern und um die Pigmente in Suspension zu halten.

18. Verfahren nach Anspruch 17, wobei das Kompatibilisierungsmittel vom silanfunktionalisierten Typ ist.

## Claims

1. Timepiece comprising a gasket (8), **characterised in that** the gasket comprises a polymer matrix charged with phosphorescent and/or fluorescent pigments.

2. Timepiece according to claim 1, in which the polymer matrix contains between 1 and 70%, preferably between 2 and 20%, more preferred between 2 and 10% and further preferred between 2 and 5% by weight phosphorescent and/or fluorescent pigments.

3. Timepiece according to claim 1 or 2, in which the phosphorescent pigments are of the type alkaline earth oxide doped with rare earths.

4. Timepiece according to any one of the preceding claims, in which the polymer matrix comprises a mixture of phosphorescent pigments and fluorescent pigments.

5. Timepiece according to any one of the preceding claims, in which the polymer matrix is made from an elastomeric, thermoplastic or thermoplastic elastomer material.

6. Timepiece according to any one of the preceding claims, in which the polymer matrix contains a bicomponent polyurethane, silicone, thermoplastic polyurethane, polyamide 12, polyester, photopolymerisable resin.

7. Timepiece according to any one of the preceding claims, in which the fluorescent pigments are selected from the group consisting of fluorescein, naphthyl, anthracene, coumarin, rhodamine, fluorobenzoate.

8. Timepiece (1) having a middle part (6) and a watch glass (7) disposed in a seat of the middle part **characterized in that** a gasket (8) according to any one of the preceding claims is interposed between the middle part (6) and the watch glass (7).

9. Timepiece (1) according to claim 8, in which on the periphery of its face outside the timepiece (1) the watch glass (7) has a converging lens (9).

10. Timepiece (1) according to claim 8 or 9, in which on the periphery of its face inside the timepiece (1) the watch glass (7) has a converging or Fresnel type lens (9).

11. Timepiece (1) according to claims 9 or 10, in which the lens (9) occupies an annular space with a thickness less than 10 mm and preferably less than 5 mm.

12. Timepiece (1) according to any one of claims 8 to 11 having a bezel (5) mounted on the middle part or in a single piece with the middle part, in which on its face outside the timepiece the bezel (5) has a dome (10) transparent to wavelengths suitable for exciting the pigments allowing the light to be focussed and directed towards a portion (11) of the bezel acting as waveguide up to the watch glass gasket (8), wherein on its outside face said portion (11) has a layer that is reflective or has a refractive index that is slightly lower than portion 11.

13. Timepiece (1) according to any one of claims 9 to 12 having a bezel (5) mounted on the middle part or in a single piece with the middle part, in which the bezel (5) and the middle part (6) are completely or partly made from a material that is transparent to suitable wavelengths.

14. Process for the production of a gasket (8) for a timepiece (1) comprising the following steps:
- providing a polymer and phosphorescent and/or fluorescent pigments;
- mixing the polymer and the pigments with a proportion of pigments in the range of between 1 and 70%, preferably between 2 and 20%, more preferred between 2 and 10% and further preferred between 2 and 5% by weight.

15. Process according to claim 14, in which the pigments are present in the form of a powder, which has a particle size distribution with a D90 less than 40 µm.

16. Process according to claims 14 or 15, in which the mixture comprises a mixture of phosphorescent pigments and fluorescent pigments.

17. Process according to any one of claims 14 to 16, in which a coupling agent is introduced into the mixture in order to prevent the formation of agglomerates in the mixture and keep the pigments in suspension.

18. Process according to claim 17, in which the coupling agent is functionalised silane.
